# EUROPEAN PATENT SPECIFICATION

(11) **EP 3 032 987 B1**
(45) Date of publication and mention of the grant of the patent: **21.10.2020**
(21) Application number: 14835757.7
(22) Date of filing: 23.01.2014
(51) Int. Cl.: A47J 27/00

(54) **ELECTRIC RICE COOKER**
ELEKTRISCHER REISKOCHER
CUISEUR À RIZ ÉLECTRIQUE

(30) Priority: 15.08.2013 CN 201310357518
(43) Date of publication of application: 22.06.2016
(73) Proprietor: Zhejiang Supor Electrical Appliances Manufacturing Co., Ltd., Zhejiang 310052 (CN)
(72) Inventor: LIANG, Ensong, Hangzhou Zhejiang 310052 (CN)
(74) Representative: Weber, Jean-François
(86) International application number: PCT/CN2014/071168
(87) International publication number: WO 2015/021754

(56) References cited:
- CN-A- 103 405 144
- CN-U- 202 445 874
- CN-U- 202 681 593
- CN-Y- 2 357 642
- FR-A1- 2 576 202
- JP-A- H06 126
- JP-A- 2001 252 181
- JP-A- 2007 282 868
- JP-B2- 3 161 915

## Description

The present invention relates to the field of electric or electromagnetic heating cookware, and in particular, to an electric rice cooker.

At present, usually the inner pot used in an electric rice cooker is generally cylinder-shaped with a bottom. The inner pot has most of its side wall extending vertically and most of its bottom extending horizontally, thus enabling a good and large contact area between the bottom of the inner pot and the electric heating tray. Also, the distance between the side wall of the inner pot and an outer pot (or the cooker body) is relatively small. Therefore, the position of the inner pot in the electric rice cooker can be relatively well controlled, facilitating successful heating and sealing of the inner pot.

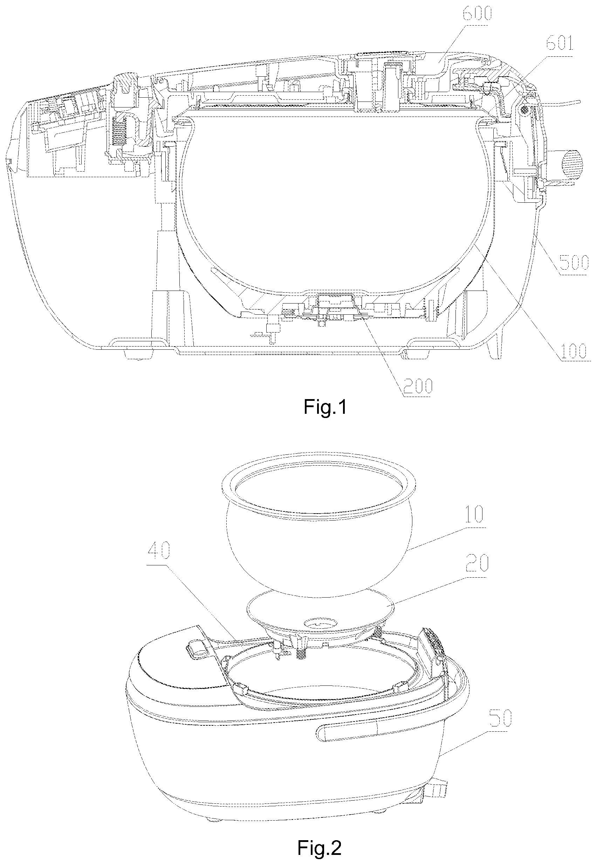

However, a spherical inner pot used in an electric rice cooker has been developed. As illustrated in Figure 1, the electric rice cooker comprises a spherical inner pot 100, an electric heating tray 200 under the bottom of the spherical inner pot 100, a cooker body 500 and an upper cover 600. The whole or most of the exterior surface of the bottom of the spherical inner pot 100 is a curved surface, and thus, the contact area with the electric heating tray 200 which has a flat upper surface is small. This on the one hand will affect the heating effect, and on the other hand, makes the spherical inner pot 100 liable to wobble in the cooker body 500, causing a possible poor sealing contact between the pot flange of the spherical inner pot 100 and the sealing ring 601 of the upper cover 600, affecting the sealing effect and thus influencing the cooking quality. Therefore, it is necessary to solve the above mentioned disadvantages present in the prior art.

Document JP-3161915B2 discloses a rice cooker equipped with a container main body consisting of inner and outer cases, with coils provided to the rear surface of the inner case in the container main body and an inner pot received in the inner case.

The present invention primarily aims to provide an electric rice cooker, which, endowed with an improved structure, can achieve a better control of the position of a spherical inner pot in the electric rice cooker, as well as good heating and sealing effects.

In order to achieve good heating and sealing, according to the present invention, an electric rice cooker according to claim 1 is provided.

Preferably, the central part of the exterior surface of the bottom of the spherical inner pot is a horizontal plane, wherein the part surrounding the horizontal plane is a curved surface.

Preferably, a plurality of elastic support members are evenly arranged in a circumferential direction at the bottom of the electric heating tray.

Preferably, a plurality of inner pot support members are evenly arranged in a circumferential direction on the first portion.

Preferably, the first portion is provided with a plurality of first grooves on the top surface thereof, wherein the plurality of inner pot support members are a plurality of inner pot spacers disposed in each of the first grooves, respectively.

Preferably, the inner pot spacer is provided with a second groove on the top surface thereof, with an anti-slip block disposed in the second groove.

Preferably, the anti-slip block is made of elastic material with a high coefficient of friction.

Preferably, the top surface of the inner pot spacer comprises a platform and a protrusion, wherein the protrusion is radially located on the outside of the platform, and the second groove is formed on the platform.

Preferably, the side wall of the spherical inner pot projects outwards.

Preferably, the diameter of the opening of the spherical inner pot is smaller than the diameter of the largest middle part of the spherical inner pot.

According to the technical solution of the present invention, the upper surface of the heating tray matches in shape with the exterior surface of the bottom of the spherical inner pot, the heating tray can fluctuate up and down by means of the elastic support member, and the first portion of the middle layer located on the top of the outer pot is provided with a plurality of inner pot support members, so that not only stable support and good contact at the bottom of the spherical inner pot, but also good positioning of the pot flange of the spherical inner pot is achieved. Thus, a sealing contact between the pot flange of the spherical inner pot and the sealing ring of the upper cover can be ensured, with the sealing effect ensured and the cooking quality improved.

The appended drawings of the description which are provided for further understanding of the present invention form a part of the present invention. The schematic embodiments of the present invention and the descriptions thereof are provided for explaining the present invention, and not for the purpose of inappropriately limiting the present invention. In the appended drawings:
Figure 1 is a schematic view of the structure of an electric rice cooker with a spherical inner pot;
Figure 2 is an exploded view of the a part of the structure of an electric rice cooker according to an embodiment of the present invention;
Figure 3 is a schematic view of the structure of an electric heating tray according to an embodiment of the present invention;
Figure 4 is an exploded view of another part of the structure of the electric rice cooker according to an embodiment of the present invention;
Figure 5 is an exploded view of yet another part of the structure of the electric rice cooker according to an embodiment of the present invention;
Figure 6 is a schematic view of the structure of an upper cover according to an embodiment of the present invention;
Figure 7 is a schematic view of the structure of an electric rice cooker according to an embodiment of the present invention;
Figure 8 is a schematic view of partial structure of an electric rice cooker according to an embodiment of the present invention.

It should be noted that features in the embodiments of the present invention can be combined with one another, within the scope defined by the appended claims. A detailed description of the present invention will be provided in the following, by reference to the appended drawings and in light of the embodiments.

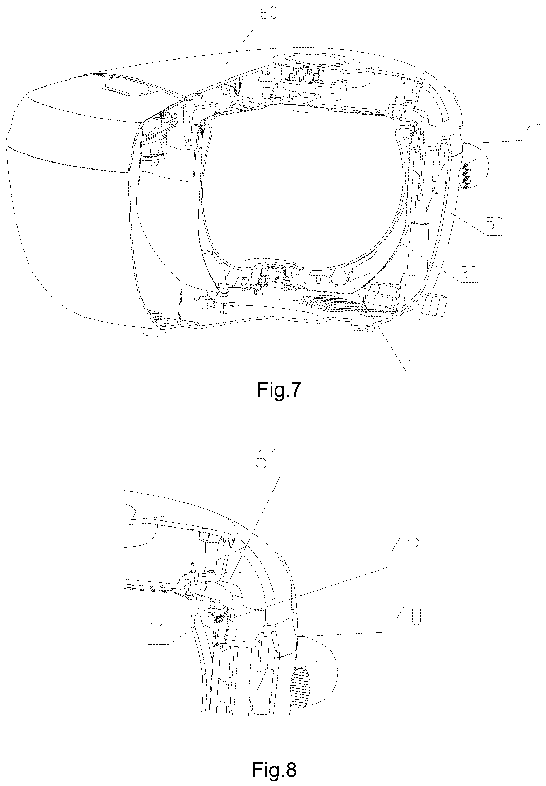

In order to overcome the disadvantages of the electric cooker equipped with a spherical inner pot fin the prior art, an improved electric rice cooker is provided by the present invention. As shown in Figure 2 and Figure 7, an electric rice cooker provided by the present invention comprises a spherical inner pot 10, an electric heating tray 20, an outer pot 30, a middle layer 40, a cooker body 50 and an upper cover 60.

Wherein, as shown in Figure 2 and Figure 7, the side wall of the spherical inner pot 10 projects outwards as a curved surface, thus is different from a traditional inner pot with a side wall that is largely straight. Moreover, the whole exterior surface of the bottom of the spherical inner pot is a curved surface, or a part of the exterior surface of the bottom is a curved surface. Preferably, the exterior surface at the central part of the bottom is a small horizontal plane, while the part surrounding the horizontal plane is a curved surface. In this case, a generally spherical exterior surface of the spherical inner pot 10 can be ensured, while a stable support and contact surface is provided by means of this small horizontal plane. In addition, the diameter of the opening of the spherical inner pot 10 is smaller than the diameter of the largest middle part (i.e., the part with the largest diameter) of the spherical inner pot 10, that is, the spherical inner pot 10 has a narrowed opening. This structure of the spherical inner pot 10 helps to improve convection inside the pot and contributes to restrain the steam therein.

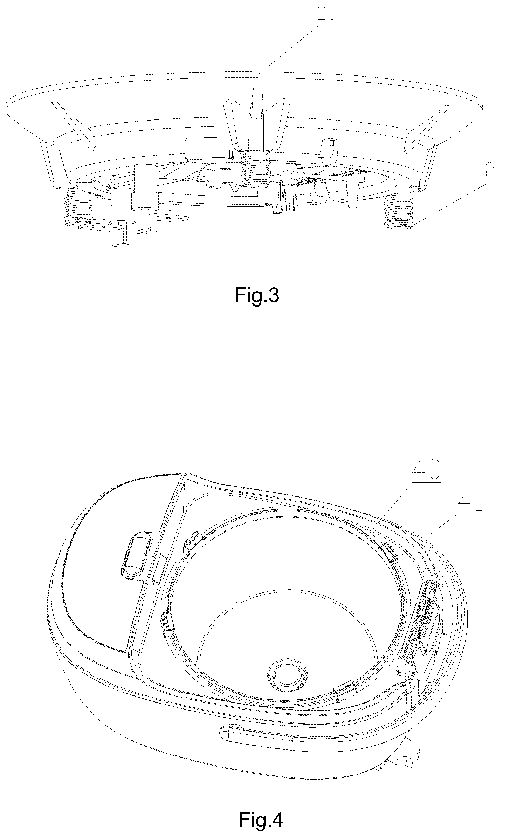

Referring to Figure 2 and Figure 3, the electric heating tray 20, located under the spherical inner pot 10, is used to support the spherical inner pot 10 and transfer heat to the spherical inner pot 10 in the manner of contact therewith. In order to match in shape with the bottom of the spherical inner pot 10, corresponding to the shape of the exterior surface of the bottom of the spherical inner pot 10, at least a part of the upper surface of the electric heating tray 20 according to the embodiment of the present invention is arranged as a concave curved surface. Therefore, the shape of the exterior surface of the bottom of the spherical inner pot 10 matches completely with that of the upper surface of the electric heating tray 20, thus the contact area between the two is increased and the electric heating tray 20 is able to better support the spherical inner pot.

Referring to Figure 3, three springs 21 are evenly arranged in a circumferential direction on the bottom of the electric heating tray 20, so that the electric heating tray 20 can fluctuate up and down. This is advantageous in compensating of the height tolerances of various components of the electric rice cooker generated during manufacturing or assembling, enabling good contact between the electric heating tray 20 and the spherical inner pot 10, and this is also advantageous in ensuring the sealing contact between the spherical inner pot 10 and the sealing ring of the upper cover 60.

Other elastic support member(s) may also be used instead of springs 21, wherein the number and the location of arrangement of these elastic support member(s) can be adjusted on demand. For example, the number can be at least one, and they can be evenly or unevenly distributed in a circumferential direction.

Referring to Figure 4 and Figure 7, the middle layer 40 has a first portion located on the top of the outer pot 30, a second portion located on the top of the cooker body 50, and a third portion connecting the first portion with the second portion. The first portion is provided with four first grooves 41 on the top surface thereof. The four first grooves 41 can be evenly or unevenly distributed in a circumferential direction.

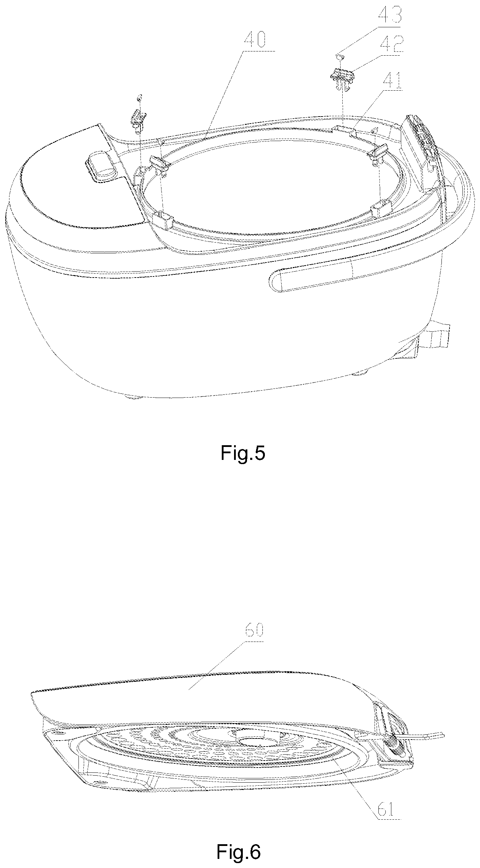

As shown in Figure 5, one inner pot spacer 42 is disposed in each of the first grooves 41. The inner pot spacer 42 constitutes an inner pot support member. As shown in Figure 6, a sealing ring 61 is provided on the lower surface of the upper cover 60. As shown in Figure 7 and Figure 8, when the spherical inner pot 10 is placed in the electric rice cooker, the lower surface of the pot flange 11 of the spherical inner pot 10 is seated upon the inner pot spacer 42. the position where the spherical inner pot 10 is placed in the electric rice cooker can be ensured by presetting the height of the inner pot spacer 42, thus a sealing contact between the upper surface of the pot flange 11 of the spherical inner pot 10 and the sealing ring 61 of the upper cover 60 is achieved, with the sealing effect ensured and the cooking quality improved.

In addition, a second groove can be further provided on the top surface of each inner pot spacer 42, with an anti-slip block 43 disposed in the second groove. The anti-slip block 43 can be made of elastic material with a high coefficient of friction, such as silica gel. Thanks to its relatively high coefficient of friction, the anti-slip block 43 can prevent relative rotation of the spherical inner pot 10 with respect to the first portion of the middle layer 40, especially the rotation of the spherical inner pot 10 when rice is being scooped out thereof. And abrasion generated between the bottom of the spherical inner pot 10 and the electric heating tray 20 is avoided. Moreover, with a certain degree of elasticity, the anti-slip block 43 can further compensate the height tolerances of various parts of the electric rice cooker caused in manufacturing and assembling, and this is advantageous in ensuring the sealing contact between the spherical inner pot 10 and the sealing ring of the upper cover 60.

Referring to Figure 5 and Figure 8, the top surface of the inner pot spacer 42 may also be designed to comprises a platform and a protrusion, wherein the protrusion is radially located on the outside of the platform, and the second groove can be formed on the platform. Thus, via a contact with the lower surface of the pot flange 11 of the spherical inner pot 10, the platform is able to restrain the position of the spherical inner pot 10 in vertical direction. Meanwhile, via a contact with the external end surface of the pot flange 11 of the spherical inner pot 10, the protrusion is able to restrain the position of the spherical inner pot 10 in radial direction. Therefore, the inner pot spacer 42 can better control the position of the spherical inner pot 10 in the electric rice cooker.

In the case of the electric rice cooker with a spherical inner pot provided by the aforementioned embodiments, the upper surface of the heating tray is a concave curved surface matching with the curved surface of the exterior surface of the bottom of the spherical inner pot, the heating tray can fluctuate up and down by means of the elastic support member, and the first portion of the middle layer located on the top of the outer pot is provided with a plurality of inner pot support members, so that not only stable support and good contact at the bottom of the spherical inner pot, but also good positioning of the pot flange of the spherical inner pot is achieved. Thus, a sealing contact between the pot flange of the spherical inner pot and the sealing ring of the upper cover can be ensured, with the sealing effect guaranteed and the cooking quality improved.

In the technical solution provided by the present invention, first, the shape of the upper surface of the heating tray matches with the specific shape of the spherical inner pot, and second, the heating tray can fluctuate up and down, and on the first portion of the middle layer located on the top of the outer pot is arranged a plurality of inner pot support members. With a combination of the multiple factors as mentioned above, the position of the spherical inner pot in the electric rice cooker can be better controlled, while good heating effects well as sealing effect can be achieved.

An electric rice cooker of the present invention has been described according to the foregoing embodiments. But this electric rice cooker is not limited to the part and/or connection relationship stated in this embodiment. For example, the exterior surface of the bottom of the spherical inner pot can be an entirely or partially curved surface, and correspondingly, the upper surface of the electric heating tray can also be an entirely or partially concave curved surface matching therewith; Besides the springs, other parts or materials can be used as the elastic support member(s); the inner pot support members are not limited to an employment of inner pot spaces and arrangement thereof, and there may a variety of forms and arrangements, as long as a sealing contact is ensured between the pot flange of the spherical inner pot and the sealing ring.

The foregoing is only a description of preferable embodiments of the present invention, and is not intended for imposing any restriction upon the present invention. To those skilled in the art, various modifications and changes are possible in view of the present invention within the scope of the appended claims.

## Claims

1. An electric rice cooker, comprising a cooker body (50), a spherical inner pot (10), an electric heating tray (20), an outer pot (30), a middle layer (40) and an upper cover (60), wherein the upper cover (60) has a sealing ring (61) on the lower surface thereof, **characterized in that** the electric heating tray (20) contacts and supports said spherical inner pot (10), at least a part of the exterior surface of the bottom of the spherical inner pot is a curved surface, and the upper surface of the electric heating tray (20) matches in shape with the exterior surface of the bottom of the spherical inner pot (10); the bottom of the electric heating tray is provided with at least one elastic support member (21) so that the heating tray (20) can fluctuate up and down by means of said elastic support member (21); the middle layer (40) has a first portion located on the top of the outer pot (30), with the first portion being provided with a plurality of inner pot support members to ensure a sealing contact between a pot flange of the spherical inner pot (10) and the sealing ring (61),

2. The electric rice cooker according to claim 1, **characterized in that** the central part of the exterior surface of the bottom of the spherical inner pot (10) is a horizontal plane, wherein the part surrounding the horizontal plane is a curved surface.

3. The electric rice cooker according to claim 1, **characterized in that** a plurality of the elastic support members (21) are evenly arranged in a circumferential direction on the bottom of the electric heating tray (20).

4. The electric rice cooker according to claim 1, **characterized in that** the plurality of inner pot support members are evenly arranged in a circumferential direction on the first portion.

5. The electric rice cooker according to claim 1, **characterized in that** the first portion is provided with a plurality of first grooves (41) on the top surface thereof, wherein the plurality of inner pot support members are a plurality of inner pot spacers (42) disposed in each of the first grooves (41), respectively.

6. The electric rice cooker according to claim 5, **characterized in that** the inner pot spacer (42) is provided with a second groove on the top surface thereof, with an anti-slip block (43) disposed in the second groove.

7. The electric rice cooker according to claim 6, **characterized in that** the anti-slip block (43) is made of elastic material with a high coefficient of friction.

8. The electric rice cooker according to claim 6, **characterized in that** the top surface of the inner pot spacer (42) comprises a platform and a protrusion, wherein the protrusion is radially located on the outside of the platform, and the second groove is formed on the platform.

9. The electric rice cooker according to claim 1, **characterized in that** the side wall of the spherical inner pot projects outwards.

10. The electric rice cooker according to claim 1, **characterized in that** the diameter of the opening of the spherical inner pot is smaller than the diameter of the largest middle part of the spherical inner pot.

## Patentansprüche

1. Elektrischer Reiskocher, umfassend einen Kocherkörper (50), einen sphärischen inneren Topf (10), eine elektrische Heizschale (20), einen äußeren Topf (30), eine Mittelschicht (40) und eine obere Abdeckung (60), wobei die obere Abdeckung (60) einen Dichtungsring (61) auf ihrer unteren Fläche aufweist, **dadurch gekennzeichnet, dass** die elektrische Heizschale (20) den sphärischen inneren Topf (10) berührt und trägt, wobei zumindest ein Teil der Außenfläche des Bodens des sphärischen inneren Topfs eine gekrümmte Fläche ist, und die obere Fläche der elektrischen Heizschale (20) in ihrer Form zu der Außenfläche des Bodens des sphärischen inneren Topfs (10) passt; wobei der Boden der elektrischen Heizschale mit mindestens einem elastischen Tragelement (21) ausgestattet ist, sodass sich die Heizschale (20) mittels des elastischen Tragelements (21) nach oben und unten bewegen kann; wobei die Mittelschicht (40) einen ersten Abschnitt aufweist, der oben auf dem äußeren Topf (30) angeordnet ist, wobei der erste Abschnitt mit mehreren Tragelementen für den inneren Topf vorgesehen ist, um einen Dichtungskontakt zwischen einem Topfflansch des sphärischen inneren Topfs (10) und dem Dichtungsring (61) sicherzustellen.

2. Elektrischer Reiskocher nach Anspruch 1, **dadurch gekennzeichnet, dass** der zentrale Teil der Außenfläche des Bodens des sphärischen inneren Topfs (10) eine horizontale Ebene ist, wobei der Teil, welcher die horizontale Ebene umgibt, eine gekrümmte Fläche ist.

3. Elektrischer Reiskocher nach Anspruch 1, **dadurch gekennzeichnet, dass** mehrere der elastischen Tragelemente (21) gleichmäßig in einer Umfangsrichtung auf dem Boden der elektrischen Heizschale (20) angeordnet sind.

4. Elektrischer Reiskocher nach Anspruch 1, **dadurch gekennzeichnet, dass** die mehreren Tragelemente für den inneren Topf gleichmäßig in einer Umfangsrichtung auf dem ersten Abschnitt angeordnet sind.

5. Elektrischer Reiskocher nach Anspruch 1, **dadurch gekennzeichnet, dass** der erste Abschnitt mit mehreren ersten Nuten (41) auf seiner Deckfläche vorgesehen ist, wobei die mehreren Tragelemente für den inneren Topf mehrere Abstandshalter (42)für den inneren Topf sind, die jeweils in jeder der ersten Nuten (41) angeordnet sind.

6. Elektrischer Reiskocher nach Anspruch 5, **dadurch gekennzeichnet, dass** der Abstandshalter (42) für den inneren Topf mit einer zweiten Nut auf seiner Oberseite vorgesehen ist, wobei ein Anti-Rutsch-Block (43) in der zweiten Nut angeordnet ist.

7. Elektrischer Reiskocher nach Anspruch 6, **dadurch gekennzeichnet, dass** der Anti-Rutsch-Block (43) aus elastischem Material mit einem hohen Reibungskoeffizienten hergestellt ist.

8. Elektrischer Reiskocher nach Anspruch 6, **dadurch gekennzeichnet, dass** die Oberseite des Abstandshalters (42) des inneren Topfs eine Plattform und einen Vorsprung umfasst, wobei sich der Vorsprung radial auf der Außenseite der Plattform befindet und die zweite Nut auf der Plattform gebildet ist.

9. Elektrischer Reiskocher nach Anspruch 1, **dadurch gekennzeichnet, dass** die Seitenwand des sphärischen inneren Topfs nach außen vorsteht.

10. Elektrischer Reiskocher nach Anspruch 1, **dadurch gekennzeichnet, dass** der Durchmesser der Öffnung des sphärischen inneren Topfs kleiner ist als der Durchmesser des größten mittleren Teils des sphärischen inneren Topfs.

## Revendications

1. Cuiseur à riz électrique, comprenant un corps de cuiseur (50), un pot interne sphérique (10), un plateau de chauffage électrique (20), un pot externe (30), une couche intermédiaire (40) et un couvercle supérieur (60), où le couvercle supérieur (60) a une bague d'étanchéité (61) sur sa surface inférieure, **caractérisé en ce que** le plateau de chauffage électrique (20) entre en contact avec et supporte ledit pot interne sphérique (10), au moins une partie de la surface extérieure du fond du pot interne sphérique est une surface courbe, et la surface supérieure du plateau de chauffage électrique (20) épouse la forme de la surface extérieure du fond du pot interne sphérique (10) ; le fond du plateau de chauffage électrique est pourvu d'au moins un élément de support élastique (21) de sorte que le plateau chauffant (20) peut osciller de haut en bas au moyen dudit élément de support élastique (21) ; la couche intermédiaire (40) a une première partie positionnée sur le dessus du pot externe (30), la première partie étant pourvue d'une pluralité d'éléments de support de pot interne pour assurer un contact étanche entre un rebord de pot du pot interne sphérique (10) et la bague d'étanchéité (61).

2. Cuiseur à riz électrique selon la revendication 1, **caractérisé en ce que** la partie centrale de la surface extérieure du fond du pot interne sphérique (10) est un plan horizontal, où la partie entourant le plan horizontal est une surface courbe.

3. Cuiseur à riz électrique selon la revendication 1, **caractérisé en ce qu'**une pluralité des éléments de support élastiques (21) est agencée uniformément selon une direction circonférentielle sur le fond du plateau de chauffage électrique (20).

4. Cuiseur à riz électrique selon la revendication 1, **caractérisé en ce que** la pluralité d'éléments de support de pot interne est agencée uniformément selon une direction circonférentielle sur la première partie.

5. Cuiseur à riz électrique selon la revendication 1, **caractérisé en ce que** la première partie est pourvue d'une pluralité de premières rainures (41) sur sa surface supérieure, où la pluralité d'éléments de support de pot interne est une pluralité d'entretoises de pot interne (42) disposées respectivement dans chacune des premières rainures (41).

6. Cuiseur à riz électrique selon la revendication 5, **caractérisé en ce que** l'entretoise de pot interne (42) est munie d'une deuxième rainure sur sa surface supérieure, avec un bloc antidérapant (43) disposé dans la deuxième rainure.

7. Cuiseur à riz électrique selon la revendication 6, **caractérisé en ce que** le bloc antidérapant (43) est réalisé en matériau élastique à coefficient de frottement élevé.

8. Cuiseur à riz électrique selon la revendication 6, **caractérisé en ce que** la surface supérieure de l'entretoise de pot interne (42) comprend une plate-forme et une saillie, où la saillie est positionnée radialement sur l'extérieur de la plate-forme, et la deuxième rainure est formée sur la plate-forme.

9. Cuiseur à riz électrique selon la revendication 1, **caractérisé en ce que** la paroi latérale du pot interne sphérique fait saillie vers l'extérieur.

10. Cuiseur à riz électrique selon la revendication 1, **caractérisé en ce que** le diamètre de l'ouverture du pot interne sphérique est inférieur au diamètre de la plus grande partie médiane du pot interne sphérique.
